Europäisches Patentamt

European Patent Office

Office européen des brevets

(11) Veröffentlichungsnummer: **0 325 961**
**A2**

(12) **EUROPÄISCHE PATENTANMELDUNG**

(21) Anmeldenummer: **89100536.5**

(22) Anmeldetag: **13.01.89**

(51) Int. Cl.⁴: **B29C 47/92**

(30) Priorität: 26.01.88 DE 3802146

(43) Veröffentlichungstag der Anmeldung:
02.08.89 Patentblatt 89/31

(84) Benannte Vertragsstaaten:
AT BE CH DE ES FR GB GR IT LI LU NL SE

(71) Anmelder: **Battenfeld Extrusionstechnik GmbH**
**Königstrasse 45**
**D-4970 Bad Oeynhausen(DE)**

(72) Erfinder: **Limper,Andreas,Dr.**
**Auf der Bülte 20**
**D-4970 Bad Oeynhausen(DE)**

(74) Vertreter: **Müller, Gerd et al**
**Patentanwälte**
**HEMMERICH-MÜLLER-GROSSE-POLLMEIER--**
**MEY-VALENTIN Hammerstrasse 2**
**D-5900 Siegen 1(DE)**

(54) Verfahren und Vorrichtung zur Temperaturbeeinflussung eines Polymer- bzw. Kunststoff-Folienschlauches, insbesondere Blasfolienschlauches.

(57) Zur Temperaturbeeinflussung des einem einem Aufschmelzextruder 1 nachgeordneten, temperierten Durchlaufwerkzeug 2 ständig austretenden Polymer- bzw. Kunststoff-Folienschlauches 3, insbesondere Blasfolienschlauches, wird gegen den aus dem Durchlaufwerkzeug austretenden Folienschlauch 3 vor seiner Verstreckung in der Verstreckvorrichtung 4 von außen und/oder innen her zusätzlich Infrarotstrahlung der Infrarot-Heizvorrichtung 6, 6a, 6b gerichtet. Die Verstrecktemperatur für den Folienschlauch 3 läßt sich dadurch entkoppelt bzw. unabhängig von der im Durchlaufwerkzeug 2 herrschenden Arbeitstemperatur erreichen.

Fig.1

# Verfahren und Vorrichtung zur Temperaturbeeinflussung eines Polymer- bzw. Kunststoff-Folienschlauches, insbesondere Blasfolienschlauches

Die Erfindung betrifft ein Verfahren zur Temperaturbeeinflussung des aus einem einem Aufschmelzextruder nachgeordneten, temperierten Durchlaufwerkzeug ständig austretenden Polymer- bzw. Kunststoff-Folienschlauches, insbesondere Blasfolienschlauches.

Gegenstand der Erfindung ist aber auch eine Vorrichtung zur Durchführung dieses Verahrens, bei welcher einem an einem Aufschmelzextruder anschließenden Durchlaufwerkzeug zur Ausformung eines Folienschlauches Verstreck- sowie Führungs-. Abzugs- und Vorabzugseinrichtungen für diesen Folienschlauch nachgeordnet sind.

Üblicherweise umfassen die Anlagen zur Herstellung von Polymer- bzw. Kunststoff-Folienschläuchen außere einem Extruder zum Aufschmelzen der Polymere und dem Durchlaufwerkzeug für die Ausformung der Schmelze zum Folienschlauch auch noch nachgeordnete Anlagenteile, nämlich Führungs- sowie Verstreck- und Abzugseinrichtungen für den Folienschlauch.

Bekannt ist es auch, diesen Anlagen im Bereich der Walzen von Vorabzugseinrichtungen eine Kühlvorrichtung zuzuordnen, die mindestens eine Außenkühlung, oftmals aber auch noch eine Innenkühlung für den Folienschlauch umfaßt. Die Kühlvorrichtung arbeitet dabei vornehmlich mit gasförmigen Kühlmedien, wie Luft. Es können aber auch flüssige Kühlmedien, wie Wasser oder Gas-Flüssigkeits-Mischkühlungen zum Einsatz gelangen.

Bei diesen bekannten Anlagen zur Herstellung von Polymer-bzw. Kunststoff-Folienschläuchen wird die für die Durchführung der Verstreckung, also der Verfestigung, des Folienschlauches jeweils notwendige Temperatur dem Folienschlauch durch die Temperatur des Durchlaufwerkzeuges aufgeprägt. Daher ist zwangsläufig die Verstrecktemperatur des Folienschlauch-Werkstoffes an die jeweils vorgegebene Werkzeugtemperatur gekoppelt.

Eine solche Temperatur-Kopplung erweist sich jedoch in vielen Fällen als nachteilig. Während nämlich üblicherweise mit relativ niedrigen Temperaturen des Durchlaufwerkzeuges gearbeitet wird, um darin chemische Reaktionen und übermäßige Temperaturbelastungen der Schmelze zu vermeiden, kann eine optimale Verstreckung des aus dem Durchlaufwerkzeug austretenden Polymer- bzw. Kunststoff-Folienschlauches nur bei einer Massetemperatur erreicht werden, welche deutlich oberhalb der bestmöglichen Arbeitstemperatur für das Durchlaufwerkzeug dient.

Besondere Schwierigkeiten stellen sich in diesem Bereich beim Betrieb von Anlagen ein, die zur Herstellung mehrschichtiger Folienschläuche dienen, und bei denen daher verschiedene Polymere bzw. Kunststoffe im Durchlaufwerkzeug zusammengeführt und daran anschließend gemeinsam verstreckt werden müssen.

Die optimalen Verstrecktemperaturen der verschiedenen Polymeren bzw. Kunststoffe liegen teilweise auf sehr unterschiedlichem Niveau. Deshalb ist es in diesen Fällen praktisch unmöglich, dem extrudierten Mehrschicht-Folienschlauch durch die Temperatur des Durchlaufwerkzeuges für jede der verschiedenen Materialkomponenten die optimale Verstrecktemperatur aufzuprägen.

Ziel der Erfindung ist es, alle vorstehend aufgezeigten Unzulänglichkeiten bei der Herstellung von Polymer- bzw. Kunststoff-Folienschläuchen, insbesondere Blasfolienschläuchen, auszuräumen.

Die der Erfindung zugrundeliegende Aufgabe besteht deshalb darin, Möglichkeiten aufzuzeigen, durch die bei einem gattungsgemäßem Verfahren und einer Vorrichtung zur Durchführung auf einfache Art und Weise die Verstrecktemperatur für die Polymer-bzw. Kunststoffolienschläuche von der Arbeitstemperatur des Durchlaufwerkzeuges weitestgehend entkoppelt werden kann.

Gelöst wird diese Aufgabe erfindungsgemäß in verfahrenstechnischer Hinsicht durch die Merkmale des Anspruchs 1, nämlich dadurch, daß gegen den aus dem Durchlaufwerkzeug austretenden Folienschlauch vor seiner Verstreckung von außen und/oder innen her zusätzlich Infrarotstrahlung gerichtet wird.

Durch das hieraus resultierende Nachheizen des Folienschlauches ist es - völlig unabhängig von der Temperierung des Durchlaufwerkzeuges - möglich, genau diejenige Temperatur zu fixieren, bei der sich das jeweilige Polymer bzw. der Kunststoff optimal verstrecken läßt.

Bei der Weiterverarbeitung von Kunststoffolien durch das sogenannte Thermoformen oder auch bei der Blasverformung von Vorformlingen zu Hohlkörpern ist es zwar bereits bekannt, Infrarot-Heizvorrichtungen einzusetzen, um in kurzer Zeit eine Wiedererwärmung des kalten Vormaterials bis mindestens auf die thermoelastische Formungstemperatur zu erzielen, die wesentlich unter der thermoplastischen Formungstemperatur liegt.

Bei der erfindungsgemäßen Verfahrenstechnik gelangt jedoch demgegenüber die Infrarotstrahlung zum Einsatz, um den aus dem Durchlaufwerkzeug austretenden Polymer- bzw. Kunststoff-Folienschlauch - kurzzeitig - auf ein Temperaturniveau zu bringen, welches die auf den thermoplastischen Temperaturbereich abgestimmte - relativ niedrige - Werkzeugtemperatur deutlich überschreitet.

Nach der Erfindung kommt es also darauf an, hohe Verstrecktemperaturen bei gleichzeitig niedrigen Werkzeugtemperaturen zu erreichen, und zwar mit dem Vorteil, daß chemische Reaktionen, die bei hohen Werkzeugtemperaturen nicht zu unterdrücken sind, unterbunden werden, und daß dabei die Temperaturbelastung der Schmelze lediglich im Folienschlauch und damit in einer relativ kurzen Zeit stattfindet.

Besonders diejenigen Probleme, welche aus hohen Werkzeugtemperaturen resultieren, wie das Anvernetzen des Kunststoffmaterials im Werkzeug bzw. im Siebwechsler oder sogar im Extruderauslauf, werden durch die erfindungsgemäße Verfahrensart ausgeräumt, mindestens jedoch stark reduziert.

Die Erfindung sieht in weiterer verfahrenstechnischer Ausgestaltung vor, daß nach Anspruch 2 die Intensität der Infrarotstrahlung variiert bzw. geregelt wird, nach Anspruch 3 die Intensitäten der von außen und innen gegen den Folienschlauch gerichteten Infrarotstrahlungen unabhängig voneinander variiert bzw. geregelt werden können, nach Anspruch 4 die Intensitäten der Infrarotstrahlungen in Umfangsrichtung des Folienschlauches variiert bzw. geregelt werden können, nach Anspruch 5 die Infrarotstrahlungen entlang dem Umfang des Folienschlauches segmentiert wirksam gemacht werden können und nach Anspruch 6 diese Infrarotstrahlungen sensorgesteuert variiert werden können.

Die nach der Erfindung in Vorschlag gebrachte Verfahrensart kann dabei nicht nur bei der Herstellung von einschichtigen Polymer- bzw. Kunststoff-Folienschläuchen in Benutzung genommen werden, sondern auch dann, wenn durch sogenannte Koextrusion mehrschichtige Polymer- bzw. Kunststoff-Folienschläuche gefertigt werden. Hierbei werden dann verschiedene Polymere bzw. Kunststoffe aus mehreren Aufschmelzextrudern im Durchlaufwerkzeug zusammengeführt und danach gemeinsam verstreckt. Da diese verschiedenen Polymere bzw. Kunststoffe zumindest teilweise unterschiedliche optimale Verstrecktemperaturen aufweisen, ist es durch die erfindungsgemäß zur Benutzung vorgeschlagene Infrarotstrahlung verhältnismäßig einfach möglich, die verschiedenen Materialschichten auch unterschiedlich zu erwärmen. Erreichbar ist das einerseits dadurch, daß die Intensität der von innen her gegen den Folienschlauch gerichteten Infrarotstrahlung anders eingestellt wird, als diejenige der von außen gegen den Folienschlauch gerichteten Infrarotstrahlung. Andererseits weisen aber auch die verschiedenen Polymere bzw. Kunststoffe unterschiedliche Absorptions-Charakateristiken für die Infrarotstrahlung auf und lassen sich schon dadurch gezielt unterschiedlich erwärmen.

Das Verstrecken von Mehrschicht-Folienschläuchen ist also mit einem Temperaturprofil möglich, bei welchem jede Polymer- bzw. Kunststoffschicht ihre optimale Verstrecktemperatur aufweist.

Mit dem erfindungsgemäßen Verfahren ist es auch möglich, Unstetigkeitsbereiche - Dick- und/oder Dünnstellen - über den Umfang des Folienschlauches hinweg zu beeinflussen bzw. zu eliminieren, indem nämlich die Intensitäten der Infrarotstrahlungen in Umfangsrichtung des Folienschlauches variiert bzw. geregelt und/oder segmentiert wirksam gemacht werden. Da das Verstreckverhalten des Polymeres bzw. des Kunststoffes von der jeweiligen Temperatur abhängig ist, kann durch das gezielte Einbringen heißerer bzw. kälterer Zonen in den Umfangsbereich des Folienschlauches auch eine Veränderung des Dickenprofils der Folie erreicht werden. Zum gezielten Einbringen der heißeren bzw. kälteren Zonen in den Folienschlauch können dabei die Infrarotstrahlungen wanddickenabhängig sensorgesteuert werden. Jede einzelne Stelle am Umfang des Folienschlauches kann dabei sehr gezielt hinsichtlich ihrer Temperatur beeinflußt werden, weil die Totzeit der Infrarotstrahlung nur sehr kurz ist und daher eine schnelle Regelung des Dickenprofils zuläßt.

Vorteilhaft ist schließlich auch, daß die Infrarotstrahlung eine hohe Effektivität, somit also erhebliche Veränderungen der Massentemperatur mit relativ kleinen Leistungen ermöglicht.

Denkbar ist es schließlich auch noch, durch die Variation der Intensität der Infrarotstrahlung die Wanddicke des Folienschlauches zu regeln, ohne daß hierzu die Abzugsgeschwindigkeit für den Folienschlauch verändert werden muß. Es läßt sich dabei auch für die Wanddickenregelung eine sehr schnelle Regelstrecke aufbauen. Da eine Geschwindigkeitsveränderung des Vorabzuges und des Abzuges entfällt, ist hier eine sehr gute Dynamik des entsprechenden Regelkreises zu erwarten.

Eine Vorrichtung zur Durchführung des Verfahrens mit den bereits eingangs genannten Gattungsmerkmalen zeichnet sich erfindungsgemäß nach Anspruch 7 hauptsächlich dadurch aus, daß dem Austrittsende des Durchlaufwerkzeuges mindestens eine Infrarot-Heizvorrichtung zu- und/oder nachgeordnet ist.

Eine solche Vorrichtung läßt sich dabei nach der Erfindung in verschiedener Art und Weise weiterentwickeln, und zwar dadurch, daß die Wirkrichtung der Infrarot-Heizvorrichtung im wesentlichen quer zur Austrittsrichtung des Folienschlauches orientiert ist, nach Anspruch 9 die Infrarot-Heizvorrichtung in Umfangsrichtung des Folienschlauches orientiert ist, nach Anspruch 10 die Infrarot-Heizvorrichtung aus einer dem Außenumfang und einer dem Innenumfang der Schlauchfolie zugeordneten Komponente besteht, nach Anspruch 11 die Infrarot-Heizvorrichtung bzw. deren Komponenten eine entlang dem Umfang der Schlauchfolie segmentierte Ausbildung hat bzw. haben, nach Anspruch 12 die Intensität der Infrarot-Heizvorrichtung durch Sensoren variierbar, insbesondere steuer- und regelbar ist, nach Anspruch 13 als Sensoren Temperaturfühler vorgesehen sind und nach Anspruch 14 als Sensoren Wanddickenmeßgeräte vorgesehen sind.

Eine erfindungsgemäß mit diesen Merkmalen ausgestattete Infrarot-Heizvorrichtung läßt sich verhältnismäßig einfach auf die unterschiedlichsten Bedürfnisse abstimmen. D.h. sie selbst und auch die zu ihrer Beeinflussung dienenden Sensoren lassen sich unbeeinflußt vom Durchlaufwerkzeug innerhalb der Gesamtanlage jeweils dort vorsehen, wo mit Bezug auf den an der Schlauchfolie durchzuführenden Verstreckvorgang ihre optimale Wirkung erreichbar ist.

So wäre es bspw. denkbar, die Infrarot-Heizvorrichtung in einer Anlage zur Herstellung von Polymer- bzw. Kunststoff-Folienschläuchen dort vorzusehen, wo diese bisher in üblicher Weise mit einer Kühlvorrichtung ausgestattet sind. Denkbar ist es aber auch, die Infrarot-Heizvorrichtung mit einer solchen Kühlvorrichtung zu kombinieren, und zwar dergestalt, daß Heiz- und Kühlvorrichtung nicht nur jeweils getrennt voneinander betreibbar sind, sondern auch gemeinsam bzw. gleichzeitig betrieben werden können. Durch gleichzeitige Kühlung während des Erwärmens können nämlich hohe Temperaturspitzen an den Oberflächen der Materialschicht und damit eine Schädigung derselben vermieden werden.

Anhand der Zeichnung wird die Erfindung nachstehend erläutert. Hierbei zeigen

Figur 1 in schematisch vereinfachter Prinzipdarstellung eine Anlage zur Herstellung von Polymer- bzw. Kunststoff-Folienschläuchen mit einer zugehörigen Vorrichtung zur Temperaturbeeinflussung des Folienschlauches in einem ersten Ausführungsbeispiel,

Figur 2 in einer der Fig. 1 entsprechenden Darstellung die Anlage zur Herstellung von Polymer- bzw. Kunststoff-Folienschläuchen mit einer abgewandelten Ausführung der Vorrichtung zur Temperaturbeeinflussung des Folienschlauches und

Figur 3 eine Ansicht in Richtung der Pfeile III-III der Fig. 2.

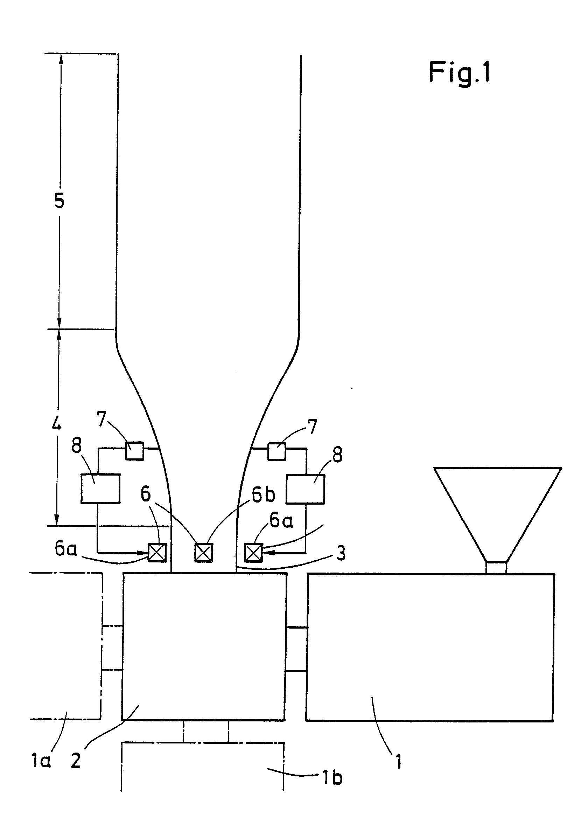

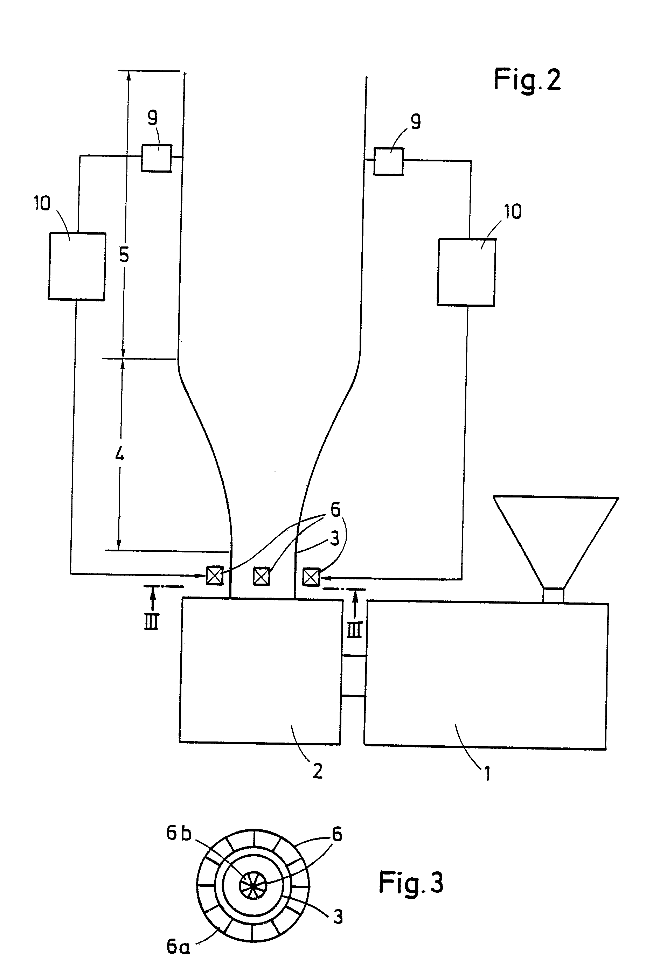

In den Figuren 1 und 2 der Zeichnung ist jeweils eine Anlage zur Herstellung von Polymer- bzw. Kunststoff-Folienschläuchen zu sehen, die mindestens einen Extruder 1 zum Aufschmelzen des Polymeres bzw. Kunststoffes und ein damit in Verbindung stehendes Durchlaufwerkzeug 2 umfaßt, mit dem die aus dem Extruder 1 ausgestoßene Schmelze ständig zu dem Folienschlauch 3 ausgeformt wird. Teil dieser Anlage sind aber auch noch eine Verstreckvorrichtung 4 für den Folienschlauch 3 sowie Führungs-, Vorabzugs- und Abzugseinrichtungen 5 für den Folienschlauch 3, welche, ebenso wie die Verstreckvorrichtung 4, jeweils durch Pfeilstrecken angedeutet sind. Obwohl die Verstreckvorrichtung 4 als auch die Führungs-, Vorabzugs- und Abzugseinrichtungen 5 schließen sich dabei an die Austrittsseite des Durchlaufwerkzeugs 2 an.

Zu- und/oder nachgeordnet ist dem Austritt des Durchlaufwerkzeuges 2 aber auch eine Infrarot-Heizvorrichtung 6, die bspw. von einer dem Außenumfang der Schlauchfolie 3 zugeordneten Komponente 6a und einer dem Innenumfang derselben zugeordneten Komponente 6b gebildet wird.

Nach Fig. 1 der Zeichnung arbeitet die Infrarot-Heizvorrichtung mit Sensoren 7 zusammen, die bspw. als Temperaturfühler wirken und innerhalb des Arbeitsbereichs der Verstreckvorrichtung 4 die Schlauchfolie 3 abtasten. Dabei wirken die Sensoren 7 auf Regler 8 ein, mit deren Hilfe die Intensität der Infrarot-Heizvorrichtung variierbar, nämlich steuer- und regelbar ist.

Beim Ausführungsbeispiel nach Fig. 2 sind der Infrarot-Heizvorrichtung 6 als Sensoren 9 Wanddicken-Meßgeräte zugeordnet, die im Anschluß an die Verstreckvorrichtung 4, nämlich innerhalb des Arbeitsbereiches der Führungs-, Vorabzugs- und Abzugsvorrichtung 5 den Folienschlauch abtasten und über Regler 10 auf die Infrarot-Heizvorrichtung 6 einwirken, damit deren Intensität variiert, insbesondere gesteuert und geregelt werden kann.

Selbstverständlich ist es auch denkbar, ein und derselben Anlage sowohl die Sensoren 7 und Regler 8 nach Fig. 1 als auch die Sensoren 9 und Regler 10 nach Fig. 2 zuzuordnen, wenn es wünschenswert ist oder gefordert wird, sowohl Temperaturkriterien als auch Wanddickenkriterien des Folienschlauches 3 zur Intensitäts-Variation der Infrarotheizung 6 zu nutzen.

In Fig. 3 der Zeichnung ist angedeutet, daß die Infrarot-Heizvorrichtung 6, und zwar sowohl deren äußere Komponente 6a als auch deren innere Komponente 6b sich über den Gesamtumfang des aus dem Durchlaufwerkzeug 2 austretenden Folienschlauches 3 erstreckt. Im einfachsten Falle lassen sich dabei die beiden Komponenten 6a und 6b der Infrarot-Heizvorrichtung 6 so auslegen, daß sie über ihren Gesamtumfang hinweg jeweils mit übereinstimmender Strahlungsintensität arbeiten.

Als besonders vorteilhaft erweist es sich jedoch, wenn die beiden Komponenten 6a und 6b der Infrarot-Heizvorrichtung 6 jeweils eine entlang dem Umfang der Schlauchfolie 3 segmentierte Ausbildung haben, wie das in Fig. 3 der Zeichnung angedeutet ist. In diesem Falle ist nämlich die Möglichkeit gegeben, die Strahlungs-Intensitäten der Infrarot-Heizvorrichtung 6 in Umfangsrichtung des Folienschlauches 3 zu variieren, nämlich zu steuern und zu regeln.

Für eine optimale Steuerung und Regelung der segmentiert ausgebildeten Infrarot-Heizvorrichtung 6 nach Fig. 3 ist es dabei empfehlenswert, die als Temperaturfühler wirkenden Sensoren 7 und/oder die als Wanddickenmesser wirkenden Sensoren 9 jeweils so anzuordnen und/oder auszubilden, daß sie den Gesamtumfang des Folienschlauches abtasten können und dabei über die zugehörigen Regler 8 bzw. 10 so auf die Infrarot-Heizvorrichtung 6 einwirken können, daß deren einzelne Umfangssegmente exakt in Abhängigkeit von den in entsprechenden Umfangsbereichen der Schlauchfolie 3 zugeordneten Meßergebnisse gesteuert und geregelt werden.

Während das Durchlaufwerkzeug 2 zur Ausformung des Folienschlauches 3 auf ein Temperaturniveau aufgeheizt und auch darauf gehalten wird, das der Plastifizierungs- bzw. Schmelzetemperatur des jeweiligen Polymer- bzw. Kunststoff-Materials entspricht, kann im Austrittsbereich dieses Durchlaufwerkzeuges 2 das Material des Folienschlauches 3, völlig entkoppelt vom Durchlaufwerkzeug 2, mit Hilfe der Infrarot-Heizvorrichtung 6 schnell und kurzzeitig auf ein die Werkzeugtemperatur übersteigendes Temperaturniveau gebracht werden, welches der Vertrecktemperatur des Folienschlauches entspricht und daher in der Verstreckvorrichtung 4 zur Erzielung der jeweils wünschenswerten oder auch der optimalen Materialverfestigung ausgenutzt werden kann.

Im Durchlaufwerkzeug 2 können bei dieser Verfahrensweise unerwünschte chemische Reaktionen mit den hieraus resultierenden Problemen nicht mehr stattfinden. Das Anvernetzen des Kunststoffes im Durchlaufwerkzeug 2, im Siebwechsler oder auch im Extruder wird daher stark reduziert, wenn nicht sogar gänzlich vermieden.

Die höheren Temperaturbelastungen der Schmelze stellen sich nur am bereits extrudierten Folienschlauch ein und können sich dabei nur über einen relativ kurzen Zeitraum und eine kurze Wegstrecke auswirken.

In Fig. 1 der Zeichnung ist - durch strichpunktierte Linien - noch angedeutet, daß mit der dort gezeigten Anlage im Bedarfsfalle auch mehrschichtige Folienschläuche aus Polymeren bzw. Kunststoffen gefertigt werden können. Für jedes der zu verarbeitenden Polymere bzw. Kunststoffe ist dabei ein besonderer Extruder 1, 1a, 1b an das Durchlaufwerkzeug 2 angeschlosslen. Dadurch werden die verschiedenen Polymeren bzw. Kunststoffe innerhalb des Durchlaufwerkzeuges 2 zusammengeführt.

Da diese verschiedenen Materialien teilweise unterschiedliche, optimale Verstrecktemperaturen aufweisen, ist es wichtig, daß mit Hilfe der Infrarot-Heizvorrichtung 6 die verschiedenen Materialschichten des extrudierten Folienschlauches 3 auch unterschiedlich erwärmt werden können. Erreicht wird das einerseits dadurch, daß sich bspw. die Intensität der inneren Komponente 6b der Infrarot-Heizvorrichtung 6 anders einstellen läßt, als die Intensität ihrer äußeren Komponente 6a. Da andererseits aber die verschiedenen Materialien auch unterschiedliche Absorptions-Charakteristiken für die Infrarotstrahlung haben, können auch hierdurch in den verschiedenen Materialschichten des Folienschlauches frei die jeweils optimalen Verstrecktemperaturen leicht und schnell erreicht werden. Der Verstreckvorgang ist also mit einem Temperaturprofil möglich, das in jeder Schicht der optimalen Verstrecktemperatur zumindest sehr naheliegt.

Die segmentierte Ausbildung und Wirkungsweise der Infrarot-Heizvorrichtung gemäß Fig. 3 macht es möglich, gezeilt Unstetigkeitsbereiche, also Dick- bzw. Dünnstellen über den Umfang des Folienschlauches 3 hinweg zu eliminieren.

Da das Verstreckverhalten des Polymeres bzw. Kunststoffes von dessen Temperatur abhängig ist, kann durch das gezielte Einbringen heißerer bzw. kälterer Zonen in den Folienschlauch 3 ohne weiteres auch eine Veränderung seines Dickenprofils erreicht werden. Die als Wanddickenmesser wirkenden Sensoren 9 werden durch die in Umfangsrichtung des Folienschlauches 3 vorhandenen Wanddickenunterschiede beeinflußt und geben die entsprechenden Meßwerte auf die Regler 10. Diese beeinflussen dann im jeweiligen Umfangsbereich die Infrarot-Heizvorrichtung 6 in solcher Weise, daß dort eine Temperaturerhöhung bzw. -verminderung im Kunststoff bewirkt wird, die zu einer entsprechenden partiellen Veränderung des Verstreckverhaltens führt.

In allen Fällen ist es von Vorteil, daß die Infrarot-Heizvorrichtung 6 mit hoher Effektivität arbeitet, also erhebliche Veränderungen der Massetemperatur in relativ kleinen Leistungen ermöglicht.

Abschließend sie noch erwähnt, daß durch die Variationsmöglichkeit der Infrarot-Heizvorrichtung 6 auch eine Regelung der Foliendicke erreicht werden kann, ohne daß hierzu die Abzugsgeschwindigkeit der Vorabzugs- und Abzugsvorrichtung verändert werden muß. Es läßt sich dabei eine sehr schnelle Regelstrecke mit guter Dynamik des Regelkreises aufbauen, weil Geschwindigkeitsänderungen der Vorabzugs- und Abzugseinrichtung nicht nötig sind.

**Ansprüche**

1. Verfahren zur Temperaturbeeinflussung des aus einem einem Aufschmelzextruder nachgeordneten, temperierten Durchlaufwerkzeug ständig austretenden Polymer- bzw. Kunststoff-Folienschlauches, insbesondere Blasfolienschlauches,
**dadurch gekennzeichnet,**
daß gegen den aus dem Durchlaufwerkzeug (2) austretenden Folienschlauch (3) vor seiner Verstreckung von außen und/oder innen her zusätzlich Infrarotstrahlung gerichtet wird.

2. Verfahren nach Anspruch 1,
**dadurch gekennzeichnet,**
daß die Intensität der Infrarotstrahlung variiert bzw. geregelt wird.

3. Verfahren nach einem der Ansprüche 1 und 2,
**dadurch gekennzeichnet,**
daß die Intensitäten der von außen und von innen gegen den Folienschlauch (3) gerichteten Infrarotstrahlung unabhängig voneinander variiert bzw. geregelt werden.

4. Verfahren nach einem der Ansprüche 1 bis 3,
**dadurch gekennzeichnet,**
daß die Intensitäten der Infrarotstrahlungen in Umfangsrichtung des Folienschlauches (3) variiert bzw. geregelt werden.

5. Verfahren nach einem der Ansprüche 1 bis 4,
**dadurch gekennzeichnet,**
daß die Infrarotstrahlungen entlang dem Umfang des Folienschlauches (3) segmentiert wirksam gemacht werden (Fig. 3).

6. Verfahren nach einem der Ansprüche 1 bis 5,
**dadurch gekennzeichnet,**
daß die Infrarotstrahlungen sensorgesteuert variiert werden.

7. Vorrichtung zur Durchführung des Verfahrens nach einem oder mehreren der Ansprüche 1 bis 6, bei welcher einem an einen Aufschmelzextruder anschließenden Durchlaufwerkzeug zur Ausformung eines Folienschlauches Verstreck- sowie Führungs-, Abzugs- und Vorabzugseinrichtungen für diesen Folienschlauch nachgeordnet sind,
**dadurch gekennzeichnet,**
daß dem Austrittsende des Durchlaufwerkzeuges (2) mindestens eine Infrarot-Heizvorrichtung (6, 6a, 6b) zu-und/oder nachgeordnet ist (Fig. 1 und 2).

8. Vorrichtung nach Anspruch 7,
**dadurch gekennzeichnet,**
daß die Wirkrichtung der Infrarot-Heizvorrichtung (6, 6a, 6b) im wesentlichen quer zur Austrittsrichtung des Folienschlauches (3) aus dem Durchlaufwerkzeug (2) orientiert ist (Fig. 1 und 2).

9. Vorrichtung nach einem der Ansprüche 7 und 8,
**dadurch gekennzeichnet,**
daß die Infrarot-Heizvorrichtung entlang dem Umfang des Folienschlauches (3) orientiert ist (Fig. 3).

10. Vorrichtung nach einem der Ansprüche 7 bis 9,
**dadurch gekennzeichnet,**
daß die Infrarot-Heizvorrichtungen (6, 6a, 6b) aus einer dem Außenumfang der Schlauchfolien (3) zugeordneten Komponente (6a) und einer dem Innenumfang der Schlauchfolie (3) zugeordneten Komponente (6b) besteht (Fig. 1 bis 3).

11. Vorrichtung nach einem der Ansprüche 7 bis 10,
**dadurch gekennzeichnet,**
daß die Infrarot-Heizvorrichtung (6, 6a, 6b) bzw. deren Komponenten (6a und 6b) eine entlang dem Umfang der Schlauchfolie (3) segmentierte Ausbildung hat bzw. haben (Fig.3).

12. Vorrichtung nach einem der Ansprüche 7 bis 11,
**dadurch gekennzeichnet,**
daß die Intensität der Infrarot-Heizvorrichtung (6, 6a, 6b) durch Sensoren (7 und 9) variierbar, insbsondere steuer- und regelbar (Regler 8, 10), ist.

13. Vorrichtung nach einem der Ansprüche 7 bis 12,
**dadurch gekennzeichnet,**
daß als Sensoren (7) Temperaturfühler vorgesehen sind (Fig. 1).

14. Vorrichtung nach einem der Ansprüche 7 bis 13,
**dadurch gekennzeichnet,**
daß als Sensoren (9) Wanddickenmeßgeräte vorgesehen sind (Fig. 2).

Fig.1

Fig.2

Fig.3